# EUROPÄISCHE PATENTSCHRIFT

(11) **EP 3 199 207 B1**
(45) Veröffentlichungstag und Bekanntmachung des Hinweises auf die Patenterteilung: **22.04.2020**
(21) Anmeldenummer: 17000128.3
(22) Anmeldetag: 26.01.2017
(51) Int. Cl.: A62C 4/00, F16K 17/00, B65D 90/32, B65D 90/34

(54) **DRUCKENTLASTUNGSVORRICHTUNG, MODULARE DRUCKENTLASTUNGSEINHEIT UND BRANDSCHUTZVORRICHTUNG**
PRESSURE RELIEF DEVICE, MODULAR PRESSURE RELIEF UNIT AND FIRE PROTECTION DEVICE
DISPOSITIF DE DÉCHARGE DE PRESSION, MODULE DÉCHARGE DE PRESSION ET DISPOSITIF DE PROTECTION CONTRE LES INCENDIES

(30) Priorität: 28.01.2016 DE 102016000848
(43) Veröffentlichungstag der Anmeldung: 02.08.2017
(73) Patentinhaber: Reitinger, Peter, 91282 Betzenstein (DE)
(72) Erfinder: Reitinger, Peter, 91282 Betzenstein (DE)
(74) Vertreter: Völger, Karl Wolfgang

(56) Entgegenhaltungen:
- DE-A1-102010 016 782
- DE-U1-202016 000 506

## Beschreibung

Die vorliegende Erfindung betrifft eine Druckentlastungsvorrichtung für explosive Gase und Stäube, eine modulare Druckentlastungseinheit und eine Brandschutzvorrichtung.

In vielen explosionsgefährdeten Anlagen wie zum Beispiel Silos, Behältern, Rohren und dergleichen werden häufig geschlossene Entlastungsöffnungen eingebaut, die im Explosionsfall durch den entstehenden Überdruck geöffnet werden. Dabei handelt es sich häufig um Berstscheiben als Sollbruchstellen oder selbstöffnende Ventile, die den Überdruck in die Atmosphäre freigeben, damit das Silo, der Behälter, die Rohre oder die mit diesen verbundenen Anlagenteile nicht beschädigt werden. Allerdings treten bei derartigen Explosionen mit explosiven Gasen und Stäuben, die meist durch ein explosives Staub-Luft-Gemisch ausgelöst werden, eine große Hitzewirkung auf, die häufig auch eine Flamme erzeugt, die außerhalb der Anlage einen Brand auslösen kann. Deshalb werden derartige Entlastungsöffnungen meist mit einer Umbauung in Form eines gasdurchlässigen Käfigs, eines Korbes oder eines andersartigen Gehäuses umbaut, durch den die Flammen an einem Austreten gehindert werden sollen.

Eine derartige Vorrichtung zur Druckentlastung für eine mit einer Berstscheibe geschlossene Entlastungsöffnung, ist aus der EP 1 369 628 B1 bekannt, bei der die Entlastungsöffnung mit einem gasdurchlässigen Korb umbaut ist. Dabei besteht die Berstscheibe aus einer dünnwandigen domförmigen Wölbung, die nach außen zum Inneren des Korbes gerichtet ist und offensichtlich aus einem dünnen Blech besteht. Dabei ist die Berstscheibe zwischen zwei Flanschen eingeklemmt, wobei der ringförmige Rand der Berstscheibe eine Soll-Reißstelle aufweist, die als kreisbogenförmiger Spalt mit beabstandeten Materialbrücken ausgebildet ist und von den Flanschen klemmend abgedeckt wird. Bei einem vorgegebenen explosionsbedingten Überdruck im Inneren der explosionsgefährdeten Anlage reißt der innere Teil der Berstscheibe vom Rand im Bereich der Spalte ab und gibt die Öffnung klappendeckelartig zum Korb als Umbauung und damit zur Atmosphäre frei. Dabei besteht die Umbauung in Form des Korbes aus einem quaderförmigen Gestell, das durch vier rechteckige, hochkant angeordnete Wandelemente und ein abdeckendes Wandelement die Berstscheibe umgibt. Die Wandelemente bestehen dabei aus ebenen beabstandeten gasdurchlässigen Innen- und Außenplatten, wobei mindestens die Außenplatten im Zentrum eine quadratische aussparende Gitterstruktur aufweisen, die innen mit einem offenporigen Metallschaum als Flammensperre hinterlegt ist. Beim Durchströmen des Metallschaums von explosionsbedingten Flammen sollen diesen durch den Metallschaum so viel Wärme entzogen werden, dass die Flammen erlöschen. Derartige Metallschaumplatten sind aufwändig in der Herstellung und stellen wegen ihrer geringen Porenweite ein Druckhindernis dar, so dass für eine schnelle Druckentlastung eine große Plattenfläche benötigt wird. Durch die geringe Porenweite können sich die Metallschaumplatten auch schnell durch die im Explosionsgas enthaltenen Staubpartikel zusetzen, so dass sich die Druckentlastung bei größeren Explosionen schnell verschlechtern kann.

Aus der DE 10 2011 112 123 A1 ist eine Druckentlastungsvorrichtung bekannt, bei der das die Entlastungsöffnung verschließende Berstelement durch einen Metallkasten umbaut ist, der aus doppelwandigen Außenwänden besteht, in denen zur Druckentlastung eine Vielzahl versetzt angeordneter Bohrungen enthalten sind. Dabei sind zwischen den parallelen doppelten Wandelementen um die Bohrungen ringförmige Rohrstutzen befestigt, die von den gegenüberliegenden Wandelementen beabstandet sind. Die Rohrstutzen der gegenüberliegenden Wandelemente sind dabei seitlich versetzt angeordnet. Im Explosionsfall werden die Explosionsgase durch die versetzten Rohrstutzen zweimal um 180° umgeleitet und dadurch abgekühlt, um dann nach außen in die Atmosphäre auszutreten. Derartige Umlenkkanäle haben zwar einen relativ großen Durchlassquerschnitt und können sich deshalb kaum durch Staubpartikel zusetzen, dabei ist aber nicht ausschließen, dass noch Staubpartikel nach außen gelangen und sich dort erneut entzünden.

Aus der US 4,328,901 A ist eine Druckentlastungsvorrichtung für ein Gehäuse einer elektrischen Vorrichtung bekannt, die vorzugsweise bei Bergbaumaschinen in Kohlebergwerken eingesetzt werden und ein Austreten von heißen Gasen und Flammen verhindern soll. Dazu ist die elektrische Vorrichtung in einem explosionsgeschützten Gehäuse angeordnet, das eine Entlastungsöffnung enthält, die von einer Magnetklappe verschließbar ist. In der Entlastungsöffnung ist zum Innenraum gerichtet zunächst ein mehrlagiges Drahtgeflecht aus Edelstahldraht angeordnet, das als metallisches Sieb mit geringen Maschenweiten und einem Drahtdurchmesser von 0,43 mm ausgebildet ist und als Vorsieb dient. Gleichzeitig soll das mehrlagige Drahtgeflecht bei einer Explosion im Inneren des Gehäuses mögliche heiße Gas-Luft-Gemische oder Flammen abkühlen und dem Explosionsdruck mechanisch standhalten. Auf diesem mehrlagigen Drahtgeflecht ist eine weitere Schicht aus einem weniger robusten porösen Metallschaum angeordnet, die im Explosionsfall durchströmt werden muss, um die heißen Explosionsgase oder Flammen weiter abzukühlen und dadurch ein Austreten der Flammen nach außen zu verhindern. Da sich insbesondere der poröse Metallschaum und auch das Vorsieb durch die im Explosionsfall austretenden Staubpartikel schnell zusetzen kann, wird die Druckentlastungswirkung dadurch stark eingeschränkt. Dies führt zu einer Druckerhöhung im Gehäuseinnenraum, durch die das Mehrschichtmaterial aus dem Metallsieb und der Metallschaumschicht leicht aus ihrer Einklemmung vor der Entlastungsöffnung herausgedrückt werden kann, wodurch eine sichere Flammensperre nicht mehr gewährleistet wird.

Aus der DE 38 22 012 C2 ist eine sogenannte Quenching-Vorrichtung bekannt, mit der Explosions- oder Verbrennungsgase beim Verlassen eines Behälters abgekühlt zur Atmosphäre abgeleitet werden. Dazu wird die Entlastungsöffnung in Form einer freigebbaren Berstscheibe mit einem topfartigen Behälter umbaut, dessen Wandungen aus mehreren wellenartig ausgeformten Edelmetallschichten bestehen. Die Edelmetallschichten sind dabei siebartig ausgebildet und mit zahlreichen Löchern versehen durchsetzt. Dadurch können die Explosionsgase nach außen entweichen und werden dabei durch die Metallschichten soweit abgekühlt, dass keine Flammen mehr austreten können. Damit auch noch unverbrannte Staub-Luft-Gemische nicht nach außen strömen können, sind zwischen den Metallschichten noch Schichten aus Stein- oder Glaswolle angebracht, die als Staubfilter dienen. Da die Stein- oder Glaswolleschichten zwischen den Metallschichten thermisch isolierend wirken, sind relativ viele Metallschichten notwendig, um die Explosions- und Verbrennungsgase hinreichend abzukühlen. Hierdurch erhöht sich aber gleichzeitig der Druckwiderstand, wodurch sich eine schnelle Druckentlastung verschlechtert.

Die für Teile der vorliegenden Erfindung nachveröffentlichte Gebrauchsmusterschrift DE 20 2016 000 506 U1 beschreibt eine Druckentlastungsvorrichtung für explosive Gase, die eine Umbauung um eine im Explosionsfall freigebbare Entlastungsöffnung enthält, wobei in der Umbauung Durchtrittsbereiche mit gasdurchlässigem Material vorgesehen sind, durch die im Explosionsfall die Explosionsgase in die Atmosphäre geleitet werden. Diese Druckentlastungsvorrichtung zeichnet sich dadurch aus, dass die Umbauung mindestens ein gasdurchlässiges Druckentlastungsmodul enthält, das ein äußeres gasdurchlässiges Gehäuseteil aufweist, in dem mindestens zwei radial durchströmbare Flammsperrkammern angeordnet sind, wobei in der der freigebbaren Entlastungsöffnung zugewandten ersten Flammsperrkammer eine erste Stahlwollfüllung mit dünnen Stahlwollfasern und in mindestens einer weiteren nach außen benachbarten zweiten Flammsperrkammer eine zweite Stahlwollfüllung mit jeweils eine Stufe dickeren Stahlwollfasern angeordnet ist.

Ferner ist aus DE 10 2010 016 782 A1 ein Schutzgehäuse der Bauart druckfeste Kapselung bekannt, bei welchem eine Druckentlastungsvorrichtung vorgesehen ist, die einen porösen Körper umfasst. Dieser ist an seinem Rand mit einem Porenverschluss versehen, um ein Durchschlagen einer Flamme an seinem Rand zu verhindern. Der Porenverschluss bildet in Verbindung mit dem umgebenden Aufnahmekörper einen spaltlosen Verbund. Zum Beispiel kann der poröse unbearbeitete Körper am Randbereich mit einem weichen Metallring umfasst sein und zum Beispiel durch eine vorgegebene kegelartige Kontur eines Aufnahmekörpers und einem Druckring so gepresst werden, dass durch die Verformung eine spaltlose Einbettung erreicht wird. Zusätzlich kann die Verformung durch federnde Elemente dauerhaft aufrechterhalten werden, um bei Temperaturschwankungen die Wärmeausdehnung der verschiedenen Materialien auszugleichen. Alternativ kann der Randbereich des Körpers durch Ummantelung mit Materialen wie Kunststoff, Metall, usw. so modifiziert werden, dass die Ummantelung zusammen mit dem Aufnahmekörper (19) durch Verkleben oder Vergießen einen formschlüssigen Verbund bilden können, der die Ex-Schutzanforderungen erfüllt.

Bei Explosionen (oder Verpuffungen) in den vorstehend beschriebenen explosionsgefährdeten Anlagen (z.B. Silos, Behälter, Rohre und dgl.) entstehen nicht selten Brände, einerseits innerhalb der Anlagen selbst, andererseits in den die Anlagen aufnehmenden Räumen oder Gebäudeteilen. Neben dem Bedarf an geeigneten Druckentlastungsvorrichtungen, die ein direktes Entfachen eines Brandes in einem Nachbarraum oder angrenzenden Gebäudeteil verhindern, besteht ferner der Bedarf an Brandschutzvorrichtungen, die ein allmähliches Übergreifen des Brandes oder ein Beeinträchtigen der Anlagen- und/oder Gebäude-Struktur durch einen länger andauernden Brand und damit einhergehende Hitzeeinwirkung wirkungsvoll verhindern.

Gattungsgemäße Brandschutzvorrichtungen, die aus dem Stand der Technik bekannt sind, beruhen auf einem System von Klappen, die im Normalbetrieb geöffnet sind und im Brandfall automatisch (mit Steuerung) schließen. Diese Einrichtungen sind wartungsintensiv und aufgrund eines mechanischen Schließmechanismus' auch anfällig gegen Ausfall und entsprechend teuer.

Ausgehend von den vorstehend genannten Nachteilen des Standes der Technik und dem aktuellen Bedarf liegt der Erfindung deshalb die Aufgabe zugrunde, einerseits eine Druckentlastungsvorrichtung der eingangs genannten Art so zu verbessern, dass möglichst ohne große Druckhindernisse eine schnelle Druckentlastung erfolgt und explosionsbedingte Flammen auch bei kompakter Ausführung zuverlässig gelöscht werden. Andererseits ist es Aufgabe der vorliegenden Erfindung eine Brandschutzvorrichtung bereitzustellen, die bei einem entstehenden Brand dessen Übergreifen auf einen Nachbarraum oder angrenzenden Gebäudeteil wirkungsvoll verhindert und Schäden an Anlagen- und/oder Gebäude-Strukturen verringert. Diese Aufgaben werden durch die in den Patentansprüchen angegebene Erfindung gelöst. Weiterbildungen und vorteilhafte Ausführungsbeispiele der Erfindung sind in den Unteransprüchen angegeben.

Die vorstehend genannte Aufgabe wird in einem ersten Aspekt der vorliegenden Erfindung durch eine Druckentlastungsvorrichtung für explosive Gase gelöst, die eine Umbauung (12) um eine im Explosionsfall freigebbare Entlastungsöffnung (11) enthält, wobei in der Umbauung (12) Durchtrittsbereiche mit gasdurchlässigem Material (8, 9, 10) vorgesehen sind, durch die im Explosionsfall die Explosionsgase (13) in die Atmosphäre (14) geleitet werden,
wobei die Umbauung (12) mindestens ein gasdurchlässiges Druckentlastungsmodul (1) enthält, das ein äußeres gasdurchlässiges Gehäuseteil (2) aufweist, in dem mindestens zwei durchströmbare Flammsperrkammern (3, 4, 5) angeordnet sind, wobei in der der freigebbaren Entlastungsöffnung (11) zugewandten ersten Flammsperrkammer (3) eine erste Stahlwollfüllung (8) mit dünnen Stahlwollfasern (15) angeordnet ist, dadurch gekennzeichnet, dass in mindestens einer weiteren nach außen benachbarten zweiten Flammsperrkammer (4) eine zweite Stahlwollfüllung (9) mit jeweils eine Stufe dickeren Stahlwollfasern (16) angeordnet ist.

Die vorstehend genannte Aufgabe wird in einem zum ersten Aspekt alternativen zweiten Aspekt der vorliegenden Erfindung durch eine Druckentlastungsvorrichtung für explosive Gase gelöst, die eine Umbauung (12) um eine im Explosionsfall freigebbare Entlastungsöffnung (11) enthält, wobei in der Umbauung (12) Durchtrittsbereiche mit gasdurchlässigem Material (58, 59, 60) vorgesehen sind, durch die im Explosionsfall die Explosionsgase (13) in die Atmosphäre (14) geleitet werden,
wobei die Umbauung (12) mindestens ein gasdurchlässiges Druckentlastungsmodul (1) enthält, das ein äußeres gasdurchlässiges Gehäuseteil (2) aufweist, in dem mindestens zwei durchströmbare Flammsperrkammern (3, 4, 5) angeordnet sind, wobei in der der freigebbaren Entlastungsöffnung (11) zugewandten ersten Flammsperrkammer (3) ein erstes gasdurchlässiges Material (58) mit ersten Fasern (55) eines ersten Durchmessers (D1) und in mindestens einer weiteren nach außen benachbarten zweiten Flammsperrkammer (4) ein zweites gasdurchlässiges Material (59) mit zweiten Fasern (56) eines zweiten Durchmessers (D2) angeordnet ist,
dadurch gekennzeichnet, dass der erste Durchmesser (D1) größer als der zweite Durchmesser (D2) ist und wobei das gasdurchlässige Material (58, 59, 60) Stahlwolle ist.

In einem dritten Aspekt der vorliegenden Erfindung wird die vorstehend genannte Aufgabe durch eine modulare Druckentlastungseinheit gelöst, die in einem Gehäusebauteil zumindest zwei gasdurchlässige Druckentlastungsmodule (1 wobei jedes Druckentlastungsmodul (1) ein äußeres gasdurchlässiges Gehäuseteil (2) aufweist, in dem mindestens zwei durchströmbare Flammsperrkammern angeordnet sind, wobei in der der freigebbaren Entlastungsöffnung (11) eines Gehäusebauteils zugewandten ersten Flammsperrkammer (3) eine erste Stahlwollfüllung (8) mit Stahlwollfasern (15) eines ersten Durchmessers (D1) angeordnet ist, und in einer nach außen benachbarten zweiten Flammsperrkammer (4) eine zweite Stahlwollfüllung (9) mit Stahlwollfasern (16) eines zweiten Durchmessers (D2) angeordnet ist, wobei entweder die zweiten Stahlwollfasern (16) eine Stufe dicker als die ersten Stahlwollfasern (15) sind, oder die Durchmesser (D1) der ersten Stahlwollfasern (15) größer als die Durchmesser (D2) der zweiten Stahlwollfasern (16) sind,
wobei das Gehäusebauteil dazu ausgelegt ist, die gasdurchlässigen Druckentlastungsmodule (1) aufzunehmen, und
wobei die zumindest zwei gasdurchlässigen Druckentlastungsmodule (1) nebeneinander oder übereinander an der im Explosionsfall freigebbaren Entlastungsöffnung (11) angeordnet sind.

Schließlich wird die vorstehend genannte Aufgabe in einem vierten Aspekt der vorliegenden Erfindung durch eine Brandschutzvorrichtung gelöst, die eine Umbauung (112) um eine im Brandfall freigebbare Öffnung (111) zwischen einem Brandraum (201) und einem Schutzraum (203) aufweist, wobei in der Umbauung (112) Durchtrittsbereiche mit gasdurchlässigem Material (58, 59, 60) vorgesehen sind,
wobei die Umbauung (112) mindestens ein gasdurchlässiges Brandschutzmodul (101) aufweist, das ein äußeres gasdurchlässiges Gehäuseteil (102) aufweist, in dem mindestens zwei durchströmbare Brandsperrkammern (103, 104, 105) angeordnet sind, wobei in der ersten Brandsperrkammer (103) ein erstes gasdurchlässiges Material (58) mit ersten Fasern (55) eines ersten Durchmessers (D1) und in mindestens einer weiteren nach außen benachbarten zweiten Brandsperrkammer (104) ein zweites gasdurchlässiges Material (59) mit zweiten Fasern (56) eines zweiten Durchmessers (D2) angeordnet ist wobei in der dem Schutzraum (203) zugewandten ersten Brandsperrkammer (103) eine die ersten Fasern (55) Stahlwollfasern sind, und in der nach außen benachbarten zweiten Brandsperrkammer (104) die zweiten Fasern (56) Stahlwollfasern sind, wobei entweder die zweiten Stahlwollfasern (56) eine Stufe dicker als die ersten Stahlwollfasern (55) sind, oder die Durchmesser (D1) der ersten Stahlwollfasern (55) größer als die Durchmesser (D2) der zweiten Stahlwollfasern (56) sind.

Die vorliegende Erfindung hat allgemein den Vorteil, dass durch das erfindungsgemäße Druckentlastungsmodul (1) im Falle einer Explosion bereits eine vollständige Druckentlastung vorgenommen werden kann, die gleichzeitig die austretenden Explosionsgase so weit abkühlt, dass vorhandene Flammen erlöschen und keine Folgebrände außerhalb der Anlage auslösen können. Ferner bietet die erfindungsgemäße modulare Druckentlastungseinheit die Möglichkeit, Anlagen oder Gebäude an spezielle Anforderungen angepasst mit einer bei Explosionen wirksamen Druckentlastungsvorrichtung zu versehen. Schließlich wird durch die erfindungsgemäße Brandschutzvorrichtung sichergestellt, dass ein durch eine Explosion entstandener Brand nicht auf Nachbarräume oder angrenzende Gebäudeteile übergreifen kann.

Nachstehend wird die Erfindung im Detail beschrieben.

In einem ersten Aspekt bezieht sich die vorliegende Erfindung auf eine Druckentlastungsvorrichtung für explosive Gase und Stäube, die eine Umbauung (12) um eine im Explosionsfall freigebbare Entlastungsöffnung (11) enthält, wobei in der Umbauung (12) Durchtrittsbereiche mit gasdurchlässigem Material (8,9, 10) vorgesehen sind, durch die im Explosionsfall die Explosionsgase (13) (wie auch ggf. Stäube) in die Atmosphäre (14) geleitet werden.

Diese Druckentlastungsvorrichtung ist dadurch gekennzeichnet, dass die Umbauung (12) mindestens ein gasdurchlässiges Druckentlastungsmodul (1) enthält, das ein äußeres gasdurchlässiges Gehäuseteil (2) aufweist, in dem mindestens zwei durchströmbare Flammsperrkammern (3, 4, 5) angeordnet sind, wobei in der der freigebbaren Entlastungsöffnung (11) zugewandten ersten Flammsperrkammer (3) eine erste Stahlwollfüllung (8) mit dünnen Stahlwollfasern (15) und in mindestens einer weiteren nach außen benachbarten zweiten Flammsperrkammer (4) eine zweite Stahlwollfüllung (9) mit jeweils eine Stufe dickeren Stahlwollfasern (16) angeordnet ist. Der Begriff "dünne Stahlwollfasern" wird in der vorliegenden Erfindung insbesondere für Stahlwollfasern einem Durchmesser von 0,01 mm bis 0,2 mm verwendet, während die Bezeichnung "eine Stufe dickeren Stahlwollfasern" sich auf Stahlwollfasern mit einem Durchmesser von 0,21 mm bis 0,5 mm oder von 0,51 mm bis 1 mm bezieht.

Bei der im Explosionsfall freigebbaren Entlastungsöffnung (11) handelt es sich um an sich bekannte Öffnungen, die nach dem Stand der Technik gewöhnlich mit Berstelementen versehen sind. Die Umbauung (12) stellt eine Art Gehäuse um diese Öffnung dar, in dem das/die Druckentlastungsmodul/e (1) aufgenommen sind.

Die Erfindung hat in Bezug auf diesen ersten Aspekt den Vorteil, dass durch ein einzelnes Druckentlastungsmodul (1) im einfachsten Fall bereits eine vollständige Druckentlastungsvorrichtung gebildet wird, die nicht nur druckentlastend wirkt, sondern gleichzeitig auch die austretenden Explosionsgase (13) soweit abkühlt, dass vorhandene Flammen erlöschen und sich nach deren Austritt in die Atmosphäre (14) auch nicht mehr entzünden können. Dabei haben insbesondere die in den Druckentastungsmodulen (1) eingebrachten Stahlwollfüllungen (8, 9, 10) der Vorteil, dass die jeweils innenliegenden Stahlwollfüllungen (8) mit den dünneren Stahlwollfasern (15) sich bis in den Schmelzbereich erhitzen und dadurch in kürzester Zeit ein Maximum an thermischer Energie aufnehmen, die die Temperatur der explosiven Gase (13) und Stäube rasch vermindert. Gleichzeitig werden durch die maximale Erhitzung der Stahlwollfasern (15, 16, 17) die entzündbaren organischen und metallischen Staubpartikel verbrannt, wodurch nachfolgend wegen Fehlens der brennbaren Staubbestandteile eine Wiederentzündung weitgehend ausgeschlossen wird. Gleichzeitig hat die Erfindung durch das Verbrennen der organischen und metallischen Staubpartikel den Vorteil, dass ein Zusetzen der Flammsperrkammern (3, 4, 5) vermieden wird, wodurch eine schnelle und ungedämpfte Druckentlastung gewährleistet bleibt.

Durch die nachfolgende weitere Flammsperrkammer (4, 5) hat die Erfindung in Bezug auf diesen ersten Aspekt mit den dickeren Stahlwollfasern (16, 17) zusätzlich den Vorteil, dass diese sich durch ihre größere Abkühlmasse nicht mehr so schnell erhitzen können und dadurch nicht so rasch in den hochglühenden Schmelzbereich gelangen, wodurch sich die bereits leicht abgekühlten Explosionsgase (13) weiter unter ihre Entzündungstemperatur abkühlen. Dadurch können sich auch noch Restmengen der organischen und metallischen Staubpartikel in den Explosionsgasen (13) nicht mehr selbst entzünden, wodurch ein Austreten von Flammen zusätzlich vermindert wird. Dabei hat die Stahlwollfüllung (9, 10) mit den etwas dickeren Stahlwollfasern (16, 17) gleichzeitig den Vorteil, dass deren gasdurchlässige Zwischenräume stets größer als poröse Filterschichten sind und dadurch sich nicht so leicht zusetzen können, so dass auch bei größeren Explosionsgasmengen eine ungedämpfte Druckentlastungswirkung beibehalten bleibt.

Die Erfindung mit mehr als nur zwei Flammsperrkammern (3, 4, 5) hat dabei in Bezug auf diesen ersten Aspekt den Vorteil, dass auch bei unterschiedlichen Explosionstemperaturen auch mehr als eine Flammsperrkammer (3, 4, 5) zur Verbrennung der organischen und metallischen Staubanteile zur Verfügung steht und zusätzlich mindestens noch eine Flammsperrkammer (3, 4, 5) zur Temperaturabsenkung unter deren Entzündungstemperatur wirksam bleibt.

Die Erfindung mit dem Einsatz von Stahlwollfüllungen (15, 16, 17) in den Flammsperrkammern 3, 4, 5) hat in Bezug auf diesen ersten Aspekt weiterhin den Vorteil, dass damit auf einfache Weise eine gasdurchlässige Kühlmasse in einem durchströmbaren Abkühlbereich geschaffen werden kann, wobei durch eine vorgebbare Packdichte und Stahlwollfaserdicke die Explosionsgase (13) und -stäube hinreichend abkühlbar sind, ohne die notwendige Druckentlastung durch lange umlenkbare Auslasskanäle zu erschweren.

Die Erfindung hat durch die industriell kostengünstig herstellbaren Druckentlastungsmodule (1) in Bezug auf diesen ersten Aspekt den Vorteil, dass diese durch verschiedene Kombinationsmöglichkeiten als umbauender Metallkasten, Korb oder als stapelbare Modulschichten als optimal nutzbare Druckentlastungsvorrichtungen zusammenstellbar sind, die die erwartbaren Explosionswirkungen maximal entlasten und dessen Entflammtemperatur hinreichen abkühlen können. Dabei sind auch stapelfähige Druckentlastungsmodule (1) ausführbar, die durch unterschiedliche Stahlwollfüllungen (15, 16, 17) mit verschiedenen aufeinander abgestimmten Stahlwollfaserdicken befüllt sind, und die den Vorteil haben, für die verschiedensten explosionsgefährdeten Anlagen mit unterschiedlichen Explosionstemperaturen verwendbar zu sein.

Die vorstehenden Ausführungen und Bevorzugungen im Hinblick auf die Druckentlastungsvorrichtung nach dem ersten Aspekt gelten für die nachstehend beschriebene Druckentlastungsvorrichtung nach dem zweiten Aspekt und die modulare Druckentlastungseinheit nach dem dritten Aspekt entsprechend. Ebenso gelten die nachstehenden Ausführungen und Bevorzugungen im Hinblick auf die Druckentlastungsvorrichtung nach dem zweiten Aspekt und die modulare Druckentlastungseinheit nach dem dritten Aspekt für die vorstehend beschriebene Druckentlastungsvorrichtung nach dem ersten Aspekt entsprechend.

In einem zweiten Aspekt, der zum ersten Aspekt alternativ sein kann, bezieht sich die vorliegende Erfindung auf eine Druckentlastungsvorrichtung für explosive Gase und Stäube, die eine Umbauung (12) um eine im Explosionsfall freigebbare Entlastungsöffnung (11) enthält, wobei in der Umbauung (12) Durchtrittsbereiche mit gasdurchlässigem Material (58, 59, 60) vorgesehen sind, durch die im Explosionsfall die Explosionsgase (13) (wie auch ggf. Stäube) in die Atmosphäre (14) geleitet werden

Diese Druckentlastungsvorrichtung ist dadurch gekennzeichnet, dass die Umbauung (12) mindestens ein gasdurchlässiges Druckentlastungsmodul (1) enthält, das ein äußeres gasdurchlässiges Gehäuseteil (2) aufweist, in dem mindestens zwei durchströmbare Flammsperrkammern (3, 4, 5) angeordnet sind, wobei in der der freigebbaren Entlastungsöffnung (11) zugewandten ersten Flammsperrkammer (3) ein erstes gasdurchlässiges Material (58) mit ersten Fasern (55) eines ersten Durchmessers (D1) und in mindestens einer weiteren nach außen benachbarten zweiten Flammsperrkammer (4) ein zweites gasdurchlässiges Material (59) mit zweiten Fasern (56) eines zweiten Durchmessers (D2) angeordnet ist.

Der erste Durchmesser (D1) und der zweite Durchmesser (D2) sind voneinander unterschiedlich, der erste Durchmesser (D1) ist größer als der zweite Durchmesser (D2).

Das gasdurchlässige Material (58, 59, 60) ist Stahlwolle.

Die Erfindung hat in Bezug auf diesen zweiten Aspekt grundsätzlich die gleichen Vorteile wie in Bezug auf den ersten Aspekt.

Wenn in dieser Ausführungsform der erste Durchmesser (D1) größer ist als der zweite Durchmesser (D2), das heißt, wenn die jeweils innenliegenden Füllungen aus dem gasdurchlässigen Material (58, 59, 60) dickere Fasern (55) aufweisen, hat das den Vorteil, dass die erste Flammsperrkammer (3) besonders hitzeresistent ist und viel Energie aufnehmen kann, ohne dass das gasdurchlässige Material (58, 59, 60) verglüht oder verbrennt. Diese Anordnung findet beispielsweise bei möglichen Explosionen Anwendung, die ein extrem heißes Staub-Gas-Gemisch erzeugen (z.B. Aluminiumstaub). Da anschließend die Hitze beim Auftreffen auf die zweite Flammsperrkammer (4) bereits reduziert ist, wird auch ein Verglühen oder Verbrennen des dort angeordneten gasdurchlässigen Materials (58, 59, 60) mit zweiten Fasern (56) eines zweiten, kleineren Durchmessers (D2) verhindert. Darüber hinaus können dritte Fasern (57) eines dritten, noch kleineren Durchmessers (D3) vorgesehen sein. Diese in Bezug auf den Faserdurchmesser feineren gasdurchlässigen Materialien (58, 59, 60) können wegen ihrer größeren Oberfläche mehr Energie absorbieren, vertragen jedoch nicht so viel Hitze. Insgesamt wird auch in diesem Aspekt in sehr kurzer Zeit ein Maximum an thermischer Energie aufgenommen, was die Temperatur der explosiven Gase (13) und Stäube rasch vermindert.

Ähnlich wie im ersten Aspekt werden durch die Erhitzung des gasdurchlässigen Materials (58, 59, 60) die entzündbaren organischen und metallischen Staubpartikel verbrannt, wodurch nachfolgend wegen Fehlens der brennbaren Staubbestandteile eine Wiederentzündung weitgehend ausgeschlossen wird. Gleichzeitig hat die Erfindung durch das Verbrennen der organischen und metallischen Staubpartikel den Vorteil, dass ein Zusetzen der Flammsperrkammern (3, 4, 5) vermieden wird, wodurch eine schnelle und ungedämpfte Druckentlastung gewährleistet bleibt.

Die Erfindung hat weiterhin den Vorteil, dass die Druckentlastungsmodule (1) auch zylinderförmig, scheibenförmig und/oder mehreckig (z.B. drei- oder sechseckig) ausführbar sind, wodurch Druckentlastungsvorrichtungen mit unterschiedlichen Umbauausführungen aufbaubar sind.

In einer Weiterbildung der Erfindung ist im Gehäuseteil (2) parallel zu den Deckplatten (19) mindestens eine gasdurchlässige Trennwand (20) angeordnet ist, die aus einer metallischen Lochplatte oder einer gasdurchlässigen Gitterstruktur besteht. Dadurch wird die gesamte Vorrichtung steifer gegen Verformungen, auch bei höheren Drücken bis p = 2 bar (Ü). Ein Zusammendrücken der Faserschichten und somit eine Verschlechterung der Gas/Staub-Durchgängigkeit wird verhindert.

In dieser Weiterbildung können mindestens zwei Trennwände (20) im Gehäuseteil (2) mindestens drei Flammsperrkammern (3, 4, 5) bilden, wobei in der ersten Flammsperrkammer (3) eine erste Stahlwollfüllung (8) mit dünnen Stahlwollfasern (15) mit einem Durchmesser von 0,01 mm bis 0,2 mm und in der nach außen benachbarten zweiten Flammsperrkammer (4) eine zweite Stahlwollfüllung (10) mit dickeren Stahlwollfasern (16) mit einem Durchmesser von 0,21 mm bis 0,5 mm und in einer weiteren nach außen benachbarten dritten Flammsperrkammer (5) mit einer weiteren Stufe dickeren Stahlwollfasern (17) mit einem Durchmesser von 0,51 mm bis 1 mm enthalten sind.

Alternativ dazu können die den Stahlwollfüllungen (8, 9, 10) entsprechenden gasdurchlässigen Materialien (58, 59, 60) in umgekehrter Reihung angeordnet sein, das heißt, dickere Faserdurchmesser in der ersten Flammsperrkammer (3) und dünner werdende Faserdurchmesser in der zweiten Flammsperrkammer (4) und der dritten Flammsperrkammer (5).

In noch einer anderen Alternative können sich in den Flammsperrkammern (3, 4, 5) dickere und dünnere Faserdurchmesser abwechseln. Mit dieser Anordnung können Gas/Staub-Durchgängigkeit und Temperaturverteilung in der Vorrichtung, bezogen auf die jeweilige Aufgabenstellung, optimiert werden.

Eine besondere Ausführungsform der Erfindung mit Distanzbolzen oder Abstandshalter zwischen den die Flammsperrkammern (3, 4, 5) abtrennenden Trennwänden (20) hat den Vorteil, dass dadurch im Explosionsfall eine komprimierende Verformung der Flammsperrkammern (3, 4, 5) verhindert wird, so dass die Druckentlastungs- und Flammsperrwirkung über die Explosionsdauer unveränderbar erhalten bleibt.

In einer Weiterbildung kann die Umbauung (12) um die Entlastungsöffnung (11) mindestens eine oder mehrere Druckentlastungsmodule (1) enthalten, wobei die Umbauung (12) bei einer aus mehreren bestehenden Druckentlastungsmodule (1) so angeordnet und miteinander verbunden sind, dass sie einen Metallkasten, einen Korb und/oder eine mehrteilige Druckentlastungsmodulschicht bilden.

Vorteilhafterweise kann atmosphärenseitig vor dem Druckentlastungsmodul (1) zusätzlich noch ein Staubfilter (21) und/oder ein Metallstaubfilter (22) angeordnet sein. Dies hat den Vorteil, dass dadurch auch nicht brennbare Staubanteile aus den Explosionsgasen (13) ausscheidbar sind, und so deren Austreten aus der explosionsgefährdeten Anlage in die Atmosphäre (14) verhindert werden kann. Der dabei mit dem Druckentlastungsmodul (1) und den außenliegenden Staubfilter (21) und/oder Metallstaubfiltern (22) gewählte Schichtaufbau hat dabei zusätzlich den Vorteil, dass nach jedem Explosionsfall die zugesetzten Filterteile oder beschädigte Druckentlastungsmodule (1) einzeln austauschbar sind.

Ferner kann das Druckentlastungsmodul (1) und/oder der Staubfilter (21) und/oder der Metallstaubfilter (22) in einer Gehäusehaube (23) angeordnet sein, wobei die Gehäusehaube (23) um die Entlastungsöffnung (11) mit der explosionsgefährdeten Anlage oder einem anderen Umbauungsteil verbunden ist.

In einem dritten Aspekt betrifft die vorliegende Erfindung eine modulare Druckentlastungseinheit, die in einem Gehäusebauteil zumindest zwei gasdurchlässige Druckentlastungsmodule (1), wie sie in der vorliegenden Erfindung definiert sind, umfasst, wobei das Gehäusebauteil dazu ausgelegt ist, die gasdurchlässigen Druckentlastungsmodule (1) aufzunehmen, und wobei die zumindest zwei gasdurchlässigen Druckentlastungsmodule (1) nebeneinander oder übereinander an der im Explosionsfall freigebbaren Entlastungsöffnung (11) angeordnet sind.

Das Gehäusebauteil kann unterschiedlich ausgestaltet sein und ist dazu ausgelegt, die aus den ersten beiden Aspekten bekannten und dort näher definierten gasdurchlässigen Druckentlastungsmodule (1) aufzunehmen. Dieses Gehäusebauteil ist insbesondere dazu ausgelegt, die gasdurchlässigen Druckentlastungsmodule (1) entweder nebeneinander oder übereinander aufzunehmen. Bei einer Anordnung nebeneinander ergibt sich eine von der Größe her gestaltbare Fläche, während übereinander angeordnete gasdurchlässige Druckentlastungsmodule (1) den Effekt eines einzelnen gasdurchlässigen Druckentlastungsmoduls (1) vervielfachen. Die Anordnung nebeneinander und übereinander kann auch kombiniert werden.

Dieser Aspekt der vorliegenden Erfindung bietet den Vorteil, auf spezielle Anforderungen beim Explosionsschutz mit einer Art Baukastensystem flexibel eingehen zu können. So können beispielsweise bei unterschiedlich genutzten Anlagen je nach Nutzung unterschiedliche Arten von Explosionsschutz vorgesehen werden. Ferner lassen sich im Rahmen der modularen Druckentlastungseinheit an einem einzelnen gasdurchlässigen Druckentlastungsmodul (1), bzw. um dieses herum, zusätzliche Gehäuse montieren (z.B. "Energy Absorber"), die je nach im konkreten Anwendungsfall eingesetztem Material unterschiedlich bestückt werden können.

In einer Weiterbildung der modularen Druckentlastungseinheit sind die zumindest zwei gasdurchlässigen Druckentlastungsmodule (1), bezogen auf den Faserdurchmesser, mit darin entgegengesetzt zueinander angeordneten Stahlwollfüllungen (8, 9, 10) oder gasdurchlässigen Materialien (58, 59, 60) übereinander angeordnet. Das bedeutet, dass sich beispielsweise an ein gasdurchlässiges Druckentlastungsmodul (1) mit Flammsperrkammern (3, 4, 5), in denen die Faserdurchmesser ansteigen, ein gasdurchlässiges Druckentlastungsmodul (1) anschließt, bei dem die Faserdurchmesser in den Flammsperrkammern (3, 4, 5) wieder abfallen.

Auf diese Weise ermöglicht die modulare Druckentlastungseinheit eine Steuerung, so dass nach einer Explosion eine optimale Energieaufnahme und Energieverteilung im Gesamtsystem sichergestellt werden kann. Dies bewirkt, dass die modulare Druckentlastungseinheit als Ganzes und die gasdurchlässigen Druckentlastungsmodule (1) als Einzelne mit ihren verschiedenen Schichten intakt bleiben, das heißt, dass die Stahlwollfüllungen (8, 9, 10) bzw. gasdurchlässigen Materialien (58, 59, 60) nicht verschmelzen und/oder verbrennen. Die modulare Druckentlastungseinheit bzw. die einzelnen gasdurchlässigen Druckentlastungsmodule (1) können mehrfach verwendet werden.

Eine Ausführungsform sieht vor, das die zumindest zwei gasdurchlässigen Druckentlastungsmodule (1) einzeln austauschbar sind. Hierdurch wird die Modularität weiter erhöht und es können die gasdurchlässigen Druckentlastungsmodule (1) je nach Anforderung beliebig kombiniert und in die modulare Druckentlastungseinheit eingebaut werden. Je nach Anforderung können dabei die gasdurchlässigen Druckentlastungsmodule (1) unabhängig von der vorherigen Strömungsrichtung eingesetzt werden.

Ein vierter Aspekt der vorliegenden Erfindung bezieht sich schließlich auf eine Brandschutzvorrichtung, die eine Einhausung (112) einer im Brandfall freigebbaren Öffnung (111) zwischen einem Brandraum (201) und einem Schutzraum (203) aufweist, wobei in der Einhausung (112) Durchtrittsbereiche mit gasdurchlässigem Material (58, 59, 60) vorgesehen sind,

Die Brandschutzvorrichtung ist dadurch gekennzeichnet, dass die Einhausung (112) mindestens ein gasdurchlässiges Brandschutzmodul (101) aufweist, das ein äußeres gasdurchlässiges Gehäuseteil (102) aufweist, in dem mindestens zwei durchströmbare Brandsperrkammern (103, 104, 105) angeordnet sind, wobei in der ersten Brandsperrkammer (103) ein erstes gasdurchlässiges Material (58) mit ersten Fasern (55) eines ersten Durchmessers (D1) und in mindestens einer weiteren nach außen benachbarten zweiten Brandsperrkammer (104) ein zweites gasdurchlässiges Material (59) mit zweiten Fasern (56) eines zweiten Durchmessers (D2) angeordnet ist.

Dabei entspricht das gasdurchlässige Brandschutzmodul (101) dem gasdurchlässigen Druckentlastungsmodul (1), wie es in der vorliegenden Erfindung definiert wird.

Die Einhausung (112) stellt eine Art Gehäuse um die im Brandfall freigebbare Öffnung (111) dar, in dem das/die Brandschutzmodul/e (101) aufgenommen sind. Mit "Brandraum" wird der Raum bezeichnet, in dem die Explosion und der Brand stattfinden, der "Schutzraum" ist der angrenzende Raum, den es zu schützen gilt.

Es hat sich in der vorliegenden Erfindung überraschenderweise herausgestellt, dass die in dem ersten, zweiten und dritten Aspekt beschriebenen und näher definierten gasdurchlässigen Druckentlastungsmodule (1) auch als gasdurchlässige Brandschutzmodule (101) eingesetzt werden können.

Dabei können die erfindungsgemäßen Brandschutzmodule (101), die wie vorstehend als Druckentlastungsmodule (1) beschrieben dem Explosionsschutz dienen und daher gasdurchlässig ausgebildet sind, eine Brandschutzfunktion dergestalt übernehmen, dass nach einer Explosion in der Anlage zunächst die vorstehend beschriebene Druckentlastung eintritt und anschließend eine gleichmäßige Energieaufnahme in den erfindungsgemäßen Brandschutzmodulen (101) stattfindet, so dass das gasdurchlässige Material (58, 59, 60) nicht verglüht, verschmilzt und/oder verbrennt, sondern Wärmenergie aufnimmt, die dann aus dem Brandraum (201) nicht oder nur in sehr geringem Maße an den Schutzraum (203) abgegeben wird.

Die Einhausung (112) kann dabei eine Vielzahl von Brandschutzmodulen (101) nebeneinander oder übereinander aufnehmen. In einer bevorzugten Ausführungsform ist die Einhausung (112) als großflächiges Wandelement ausgestaltet, das selbsttragend ausgeführt ist. Abhängig vom Einsatz einer großflächig ausgeführten Einhausung (112) kann diese auch ein tragendes Konstruktionselement darstellen.

In einer Weiterbildung weist die Brandschutzvorrichtung ferner eine Druckregeleinrichtung zur Einstellung eines Unterdrucks in dem Brandraum (201) im Vergleich zum Schutzraum (203) auf.

Die Druckregeleinrichtung kann vorteilhafterweise als Absaugeinrichtung mittels Ventilator ausgeführt sein. Damit werden im Raum die Rauchgase abgesaugt und über das Fördervolumen und Saugdruck des Ventilators die Außentemperatur des Elementes bis auf Raumtemperatur abgesenkt.

Diese Weiterbildung hat den Vorteil, dass bereits bei einem geringen Unterdruck von p > 1 Pa (z.B. durch eine Art Absaugung) Gas (bzw. Atmosphäre) in den Brandraum (201) einzogen wird und so die Wärmeenergie im Brandraum (201) von den erfindungsgemäßen Brandschutzmodulen (101) an dieses (kältere) Gas abgegeben wird. Auf diese Weise wird die Oberfläche der erfindungsgemäßen Brandschutzmodule (101) auf der Seite des Schutzraums (203), d.h. an der vom Brand abgewandten Seite, stark gekühlt. Abhängig von der Brandtemperatur im Brandraum (201) beträgt die Oberflächen-Temperatur im Schutzraum (203) maximal 100°C, bevorzugt 75°C, insbesondere 50 °C. Je nach Ausführung der Absaugung kann die Oberflächen-Temperatur im Schutzraum (203) bis auf Raumtemperatur absinken.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1:: eine Seitenansicht eines als Teilschnitt dargestellten Druckentlastungsmoduls 1 einer Druckentlastungsvorrichtung nach dem ersten Aspekt,
- Fig. 2:: eine Seitenansicht eines als Teilschnitt dargestellten Druckentlastungsmoduls 1 einer Druckentlastungsvorrichtung nach dem zweiten Aspekt,
- Fig. 3: eine perspektivische Darstellung eines Druckentlastungsmoduls 1,
- Fig. 4:: eine Explosionsdarstellung eines Druckentlastungsmoduls 1 mit zusätzlichen Staubfiltervorsätzen, und
- Fig. 5: eine perspektivische Darstellung einer Brandschutzvorrichtung mit zwei in einer Wand 205 angeordneten Brandschutzmodulen 101.

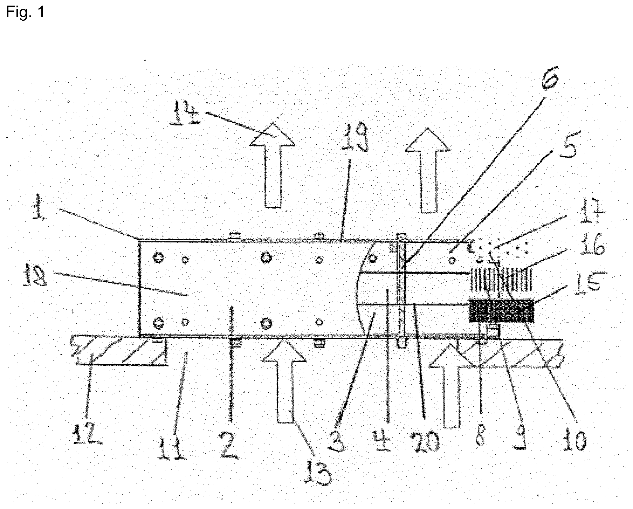

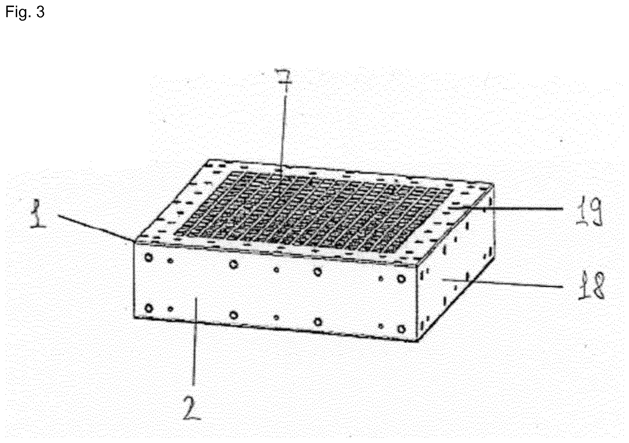

In Figur 1 ist eine Seitenansicht eines als Teilschnitt ersichtlichen Druckentlastungsmoduls 1 und in Figur 3 ein geschlossenes Druckentlastungsmodul 1 einer Druckentlastungsvorrichtung nach dem ersten Aspekt der vorliegenden Erfindung dargestellt, das drei Flammsperrkammern 3, 4, 5 enthält, in denen drei verschiedene Stahlwollfüllungen 8, 9, 10 angeordnet sind, wobei in der zur Entlastungsöffnung 11 gerichteten ersten Flammsperrkammer 3 dünne Stahlwollfasern 15 und dieser benachbarten zweiten Flammsperrkammer 4 dickere Stahlwollfasern 16 und in der zur Atmosphäre 14 ausgerichteten dritten Flammsperrkammer 5 noch eine Stufe dickere Stahlwollfasern 17 eingefüllt sind.

Das Druckentlastungsmodul 1 enthält ein quaderförmiges Gehäuse 2, in dem die drei Flammsperrkammern 3, 4, 5 angeordnet sind. Dabei ist das Gehäuse 2 vorzugsweise aus Stahlblechteilen gefertigt, die an ihren schmalen Seitenwänden 18 geschlossene Blechplatten aufweisen. Die in Durchströmrichtung liegenden Deckplatten 19 besitzen im Zentrum um einen geschlossenen Randbereich ein Lochblech mit Gitterlöchern mit Maschenweiten von ca. 20 mm x 20 mm, die ein ungehindertes Durchströmen der explosiven Gase 13 und Stäube ermöglichen. Dabei besitzt ein derartiges Druckentlastungsmodul 1 vorzugweise eine Größe von 500 mm x 500 mm x 100 mm und kann damit direkt auf eine Entlastungsöffnung 11 bis zu einer Größe von 500 mm x 500 mm befestigt werden und stellt dann selbst eine Umbauung 12 einer Entlastungsöffnung 11 dar.

Derartige Druckentlastungsmodule 1 können aber auch zu mehreren miteinander zu größeren Umbauungen 12 oder einer korbähnlichen Umbauung zusammengesetzt werden. Solche Druckentlastungsmodule 1 können aber auch in ansonsten geschlossenen Gehäuseeinheiten zur Druckentlastung als Teil der Umbauung 12 eingebaut werden, wobei die Abmessungen auch auf andere Größen von Entlastungsöffnungen 11 abgestimmt werden können.

Innerhalb des Gehäusemoduls 1 sind parallel zu den Deckplatten 19 noch zwei Trennwände 20 angeordnet, die den Gehäuseinnenraum in drei vorzugsweise gleichgroße Flammsperrkammern 3, 4, 5 unterteilen, wobei diese Trennwände 20 eine Vielzahl von Durchströmlöchern aufweisen oder als Lochblech 7 ausgebildet sind. Zur Stabilisierung der Flammsperrkammern 3, 4, 5 in Durchströmrichtung sind zwischen den beiden Deckplatten 19 zusätzlich noch mehrere, vorzugsweise neun, Distanzbolzen 6 oder andere Abstandshalter montiert. Dadurch wird der Durchströmabstand der Trennwände 20 und der Deckplatten 19 zueinander auch im Explosionsfall konstant gehalten, damit die darin befindlichen Stahlwollfüllungen 8,9,10 nicht komprimiert werden.

In der ersten Flammsperrkammer 1, die unmittelbar über der Entlastungsöffnung 11 angeordnet ist, ist eine Stahlwollfüllung 8 eingebracht, die verhältnismäßig dünne Stahlwollfasern 15 mit Faserdicken von 0,01 mm bis 0,2 mm aufweist. In der nächst folgenden zweiten Flammsperrkammer 4 ist hingegen eine zweite Stahlwollfüllung 9 angeordnet, die eine Stufe dickere Stahlwollfasern 16 einer Dicke von 0,21 mm bis 0,5 mm enthält. In der dritten Flammsperrkammer 5, die in Durchströmrichtung zur Atmosphäre 14 ausgerichtet ist, ist eine dritte Stahlwollfüllung 10 eingefüllt, deren Stahlwollfasern 17 noch eine weitere Stufe dicker sind als die in der zweiten Flammsperrkammer 4 mit Faserdicken von vorzugsweise 0,51 mm bis 1 mm. Dabei sind die Stahlwollfasern 15, 16, 17 in jeder Flammsperrkammer 3, 4, 5 von gleichbleibender Dicke und jeweils auf die zu erwartende Explosionstemperatur abgestimmt. Die einzelnen Stahlwollfüllungen 8, 9, 10 sind dabei in ungeordneten oder geordneten Faserbündeln eingefüllt, die nur soweit komprimiert sind, dass sie den durchströmenden Explosionsgasen 13 und -stäuben kein nennenswertes Druckhindernis entgegenstellen, um eine rasche Druckentlastung zu gewährleisten. Dies setzt gleichzeitig eine grobmaschige Stahlwollfüllung 8, 9, 10 voraus, die die in den Explosionsgasen 13 und - stäuben enthaltenen Staubpartikel nicht nennenswert zusetzen können. Die einzufüllenden Stahlwollfüllungen 8, 9, 10 sind dabei von ihrer Menge und deren Durchströmquerschnitt von den Druckentlastungsvorgaben der zu schützenden explosionsgefährdeten Anlage abhängig und werden auf diese abgestimmt. Dabei hat sich in der Praxis gezeigt, dass insbesondere kohlenstoffhaltige Staubexplosionen Explosionstemperaturen von 800 °C bis 1200 °C erzeugen, die in einem oder mehreren Druckentlastungsmodulen 1 auf höchstens 250 °C abgesenkt werden müssen, bevor die Explosionsgase 13 und Stäube in die umgebende Atmosphäre 14 austreten dürfen. Deshalb sind in der ersten Flammsperrkammer 3 relativ dünne Stahlwollfasern 15 von 0,01 mm bis 0,2 mm angeordnet, deren Dicke so auf die erwartbare Explosionstemperatur abgestimmt ist, dass diese beim Durchströmen mindestens bis zum Erglühen oder bis zum Schmelzpunkt aufgeheizt werden, wodurch der Explosionsflamme schon ein Großteil der thermischen Energie entzogen wird. Dadurch werden gleichzeitig die in den Explosionsgasen 13 und Stäube noch vorhandenen unverbrannten organischen und metallischen Staubpartikel entzündet, so dass es in der ersten Flammsperrkammer 3 nicht zu einer Anhäufung von Staubpartikeln kommen kann, die die Druckentlastung behindern würden.

In der nächst folgenden zweiten Flammsperrkammer 4 mit den eine Stufe dickeren Stahlwollfasern 16 von 0,21 mm bis 0,5 mm strömt dann eine auf ca. 400 °C bis 800 °C abgekühlte Explosionsflamme, durch die die dickeren Stahlwollfasern 16 nicht mehr bis zum Schmelzpunkt erhitzt werden. Damit wird durch die größere Kühlmasse in der zweiten Flammsperrkammer 4 so viel thermische Energie aufgenommen, dass die Flammentemperatur soweit herabgesetzt wird, dass die Explosionsflamme in der Regel erlischt. Sollten hingegen aus der zweiten Flammsperrkammer 4 noch entzündbare oder brennbare Explosionsgase 13 und Stäube austreten, so gelangen diese in die nächstfolgende dritte Flammsperrkammer 5 mit den nächst dickeren Stahlwollfasern 17 der Stufe drei mit Faserdurchmessern von ca. 0,51 mm bis 1 mm, die durch ihre nochmals vergrößerte Kühlmasse die Explosionsgase 13 und Stäube auf höchstens 250 °C abkühlen. Dadurch wird die Flammtemperatur der Explosionsgase 13 und Stäube auf jeden Fall unterschritten und ein Wiederaufflammen von entzündlichen Explosionsgasen 13 und Stäube verhindert.

In die jeweiligen Flammsperrkammern 3, 4, 5 wird dabei jeweils so viel Stahlwolle eingelegt, dass die notwendige Kühlwirkung erzeugbar ist und Maschenweiten der Stahlwollfüllung 8, 9, 10 vorgesehen sind, die sich nicht mit noch vorhandenen Staubpartikeln zusetzen können und die Druckentlastung stets gewährleistet bleibt. Dabei werden die Faserdurchmesser insbesondere auf die höchstmögliche erwartbare Explosionstemperatur abgestimmt, wobei für relativ niedrige Explosionstemperaturen relativ dünne Faserdurchmesser, und für relativ hohe Explosionstemperaturen die nächst dickeren Faserdurchmesser in den verschiedenen Flammsperrkammern 3, 4, 5, gewählt werden. Die Abstufung der konstanten Faserdurchmesser in den einzelnen Flammsperrkammern 3, 4, 5 wird immer bezogen auf den dünnsten Faserdurchmesser in der ersten Flammsperrkammer 3 und wird dazu in einem vorgegebenen Verhältnis erhöht, wobei in einem Druckentlastungsmodul 1 mindestens zwei oder auch mehr als drei Flammsperrkammern 3, 4, 5 vorgesehen werden können. Dabei hängt die Größe der einzelnen Flammsperrkammern 3, 4, 5 im Wesentlichen von der abkühlbaren Masse der vorgesehenen Stahlwollfüllung 8, 9, 10 und deren Durchströmwiderstand ab, wobei die einzelnen Flammsperrkammern 3,4,5 vorzugsweise gleich groß sind. Die vorgesehene Stahlwollfüllmasse kann aber auch durch den Einsatz mehrerer Druckentlastungsmodule 1 an einer Entlastungsöffnung 11 erreicht werden.

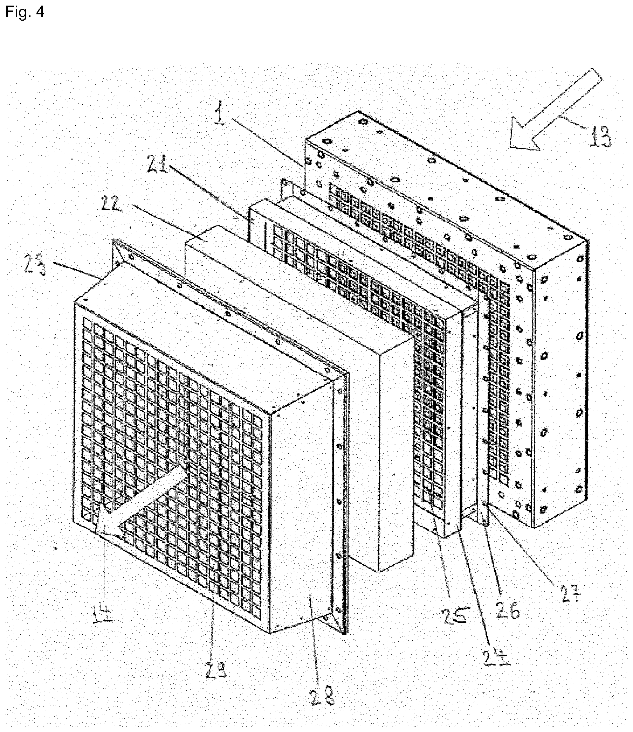

In Figur 4 ist eine Druckentlastungsvorrichtung mit einem Druckentlastungsmodul 1 und zwei zusätzlichen Staubfiltervorsätzen 21, 22 dargestellt. Dabei ist das Druckentlastungsmodul 1 wie in Figuren 1 und 3 beschrieben ausgebildet und direkt über der Entlastungsöffnung 11 angeordnet. Da in diesem Druckentlastungsmodul 1 die Explosionsgase 13 und Stäube bereits unter 250 °C abgekühlt und die leicht entzündbaren Gas-Staub-Gemische mit organischen oder metallischen Stäuben nahezu verbrannt sind, ist nach deren Austreten eine erneute Entzündbarkeit nahezu ausgeschlossen. Trotzdem können sich in den austretenden Explosionsgasen 13 und Stäube noch unverbrannte Reststäube aus metallischem oder anorganischem Material befinden, die nicht in die Atmosphäre 14 gelangen sollen, da diese möglicherweise beim Einatmen bei Menschen gesundheitliche Beschwerden hervorrufen können. Deshalb ist in Durchströmrichtung nach dem Druckentlastungsmodul 1 noch ein Staubfilter 21 vorgesehen. Wegen der abgesenkten Temperatur der ausströmenden explosiven Gase 13 und Stäube von unter 250 °C ist dazu vorzugsweise ein Papierfilter als Staubfilter 21 vorgesehen, der hauptsächlich mineralische Staubpartikel aus anorganischen Materialien ausfiltern soll. Dieser Staubfilter 21 besteht vorzugweisen aus einem mehrfach gefalteten Filterpapier mit gasdurchlässigen, porösen Papierlagen und ist in einem Kunststoffrahmen 24 befestigt. Dieser Kunststoffrahmen 24 entspricht in seinen Außenabmessungen (Durchströmquerschnitt) den Maßen des Druckentlastungsmoduls 1 und ist an seinen Durchströmflächen mit einem durchströmbaren Kunststoffgitter 25 abgedeckt. Dabei ist bei dem Filterpapier eine Porosität gewählt, die zwar die mineralischen Stäube zurückhält, aber den weitgehend von organischen und metallischen Staubpartikeln befreiten Explosionsgasen 13 und Stäuben keinen nennenswerten Durchströmwiderstand entgegenstellt. Zur dichten Fixierung des Staubfilters 21 an dem Druckentlastungsmodul 1 ist am Kunststoffrahmen 24 ein Befestigungsrand 26 mit Befestigungslöchern 27 vorgesehen, mit dem dieser am Druckentlastungsmodul 1 angeschraubt wird.

In Durchströmrichtung nach dem Staubfilter 21 ist zusätzlich noch ein Metallstaubfilter 22 angeordnet, der die in den Explosionsgasen 13 und Stäuben noch befindlichen extrem kleinen nicht brennbaren Metallstäube ausfiltern soll, die ebenfalls nicht in die Atmosphäre 14 gelangen dürfen. Dieser Metallstaubfilter 22 besteht vorzugsweise aus einem porösen Kunststoffschaum oder besonders feinporigen, watteartigen feinsten Metallfäden. Dabei entspricht der Metallstaubfilter 22 in seinen Außenabmessungen (Durchströmquerschnitt) ebenfalls der Größe des Staubfilters 21 und liegt im eingebrauten Zustand fest auf diesem auf.

Zur Fixierung des Druckentlastungsmoduls 1 und der Staubfilter 21, 22 über der Entlastungsöffnung 11 werden das Druckentlastungsmodul 1 mit seinen Staubfiltern 21, 22 von einer Gehäusehaube 23 umgeben, die als Teil der Umbauung 12 an der explosionsgefährdeten Anlage befestigt wird. Dabei besteht die Gehäusehaube 23 aus einem geschlossenen Blechrahmen 28, der auf seiner äußeren Deckfläche ebenfalls einen durchströmbaren Gitterrost 29 aufweist. Zur Befestigung der Gehäusehaube 23 an der explosionsgefährdeten Anlage enthält dieser ebenfalls einen gelochten Befestigungsrand, der mit der explosionsgefährdeten Anlage verschraubbar ist. Dabei kann die Druckentlastungsvorrichtung sowohl aus einem separat angeordneten Druckentlastungsmodul 1 als auch aus einem in der Gehäusehaube 23 integrierten Druckentlastungsmodul 1 und den beiden Staubfiltern 21, 22 bestehen.

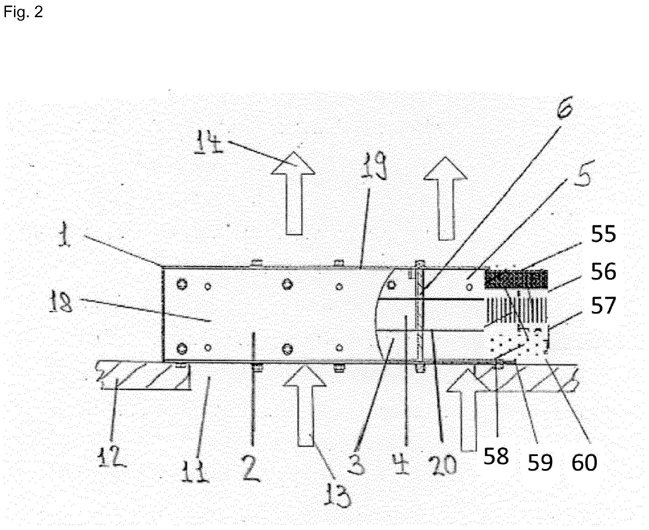

In Figur 2 ist eine Seitenansicht eines als Teilschnitt ersichtlichen Druckentlastungsmoduls 1 nach dem zweiten Aspekt der vorliegenden Erfindung dargestellt, das drei Flammsperrkammern 3, 4, 5 enthält, in denen drei verschiedene gasdurchlässige Materialien 58, 59, 60 angeordnet sind. Die bauliche Ausführung des Druckentlastungsmoduls 1 nach dem zweiten Aspekt entspricht grundsätzlich der baulichen Ausführung des Druckentlastungsmoduls 1 nach dem ersten Aspekt, gleiche Elemente sind daher mit den gleichen Bezugszeichen versehen.

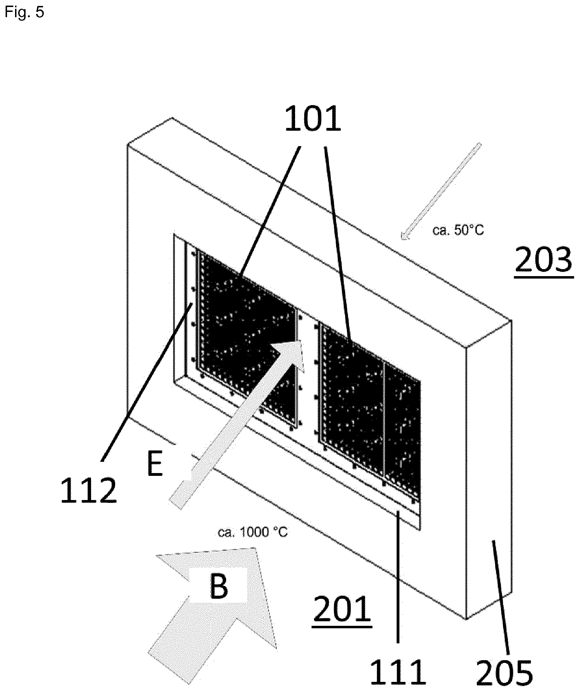

In Figur 5 ist eine erfindungsgemäße Brandschutzvorrichtung nach dem vierten Aspekt der Erfindung dargestellt. Die Brandschutzvorrichtung ist in eine Wand 205 zwischen einem Brandraum 201 und einem Schutzraum 203 eingesetzt. Die Brandschutzvorrichtung besteht im vorliegenden Beispiel aus einer Einhausung 112 in einer im Brandfall freigebbaren Öffnung 111 der Wand 205. Die Einhausung 112 nimmt im konkreten Fall zwei gasdurchlässige Brandschutzmodule 101 auf.

Ähnlich wie vorstehend in Bezug auf die gasdurchlässige Druckentlastungsmodule 1 beschrieben, weist ein erfindungsgemäßes gasdurchlässiges Brandschutzmodul 101 ein äußeres gasdurchlässiges Gehäuseteil 102 auf, in dem mindestens zwei durchströmbare Brandsperrkammern 103, 104, 105 angeordnet sind. In der ersten Brandsperrkammer 103 ist dabei ein erstes gasdurchlässiges Material 58 mit ersten Fasern 55 eines ersten Durchmessers D1 und in mindestens einer weiteren nach außen benachbarten zweiten Brandsperrkammer 104 ein zweites gasdurchlässiges Material 59 mit zweiten Fasern 56 eines zweiten Durchmessers D2 angeordnet. Grundsätzlich entspricht der Aufbau des erfindungsgemäßen Brandschutzmodul 101 dem Aufbau der in den Figuren 1, 2 und 3 dargestellten gasdurchlässigen Druckentlastungsmodule 1.

Die erfindungsgemäße Brandschutzvorrichtung kann bei Explosionsvorgängen mit anschließender Brandentwicklung vorteilhaft eingesetzt werden. Explosionsvorgänge, wie Sie von den erfindungsgemäßen Druckentlastungsmodulen 1 aufgefangen werden, sind i.d.R. sehr kurzzeitig (z.B. < 1 s), erzeugen aber eine große Hitze von Temperaturen bis zu 1.400 °C. Anschließend fällt die Temperatur des Brandes deutlich ab, gewöhnlich auf unter 1.000 °C.

Zum Schutz von Anlagen und Gebäuden werden Brandschutzklassen vorgegeben. Der für explosionsgeschützte Anlagen relevante Brandschutz EI 90 bedeutet beispielsweise, dass bei einer Temperatur des Brandes von 1.000 °C im Innenraum die Außenfläche dieses Raumes innerhalb von 90 Minuten nicht heißer werden darf als 180 °C.

Wie vorstehend bereits beschrieben, ist es mit der erfindungsgemäßen Brandschutzvorrichtung möglich, die Oberflächen-Temperatur im Schutzraum 203 auf maximal 100 °C, bevorzugt 75 °C, insbesondere 50 °C zu begrenzen. Abhängig von der Art der Absaugung kann die Oberflächen-Temperatur im Schutzraum 203 auch bis auf Raumtemperatur abgesenkt werden.

### Bezugszeichen

- 1: gasdurchlässiges Druckentlastungsmodul
- 2: gasdurchlässiges Gehäuseteil
- 3: Flammsperrkammer
- 4: Flammsperrkammer
- 5: Flammsperrkammer
- 6: Distanzbolzen
- 7: Lochblech
- 8: Stahlwollfüllung
- 9: Stahlwollfüllung
- 10: Stahlwollfüllung
- 11: im Explosionsfall freigebbare Entlastungsöffnung
- 12: Umbauung
- 13: Explosionsgase
- 14: Atmosphäre
- 15: Stahlwollfasern
- 16: Stahlwollfasern
- 17: Stahlwollfasern
- 18: geschlossene Seitenwände
- 19: gasdurchlässige Deckplatten
- 20: gasdurchlässige Trennwand
- 21: Staubfilter
- 22: Metallstaubfilter
- 23: Gehäusehaube
- 24: Kunststoffrahmen
- 25: durchströmbares Kunststoffgitter
- 26: Befestigungsrand
- 27: Befestigungslöcher
- 28: geschlossene Blechrahmen
- 29: durchströmbarer Gitterrost
- 55: erste Fasern
- 56: zweite Fasern
- 57: dritte Fasern
- 58: gasdurchlässiges Material
- 59: gasdurchlässiges Material
- 60: gasdurchlässiges Material
- 101: gasdurchlässiges Brandschutzmodul
- 102: gasdurchlässiges Gehäuseteil
- 103: Brandsperrkammer
- 104: Brandsperrkammer
- 105: Brandsperrkammer
- 111: im Brandfall freigebbare Öffnung
- 112: Einhausung
- 201: Brandraum
- 203: Schutzraum
- 205: Wand
- B: Brand
- D1: Durchmesser der ersten Fasern
- D2: Durchmesser der zweiten Fasern
- D3: Durchmesser der dritten Fasern
- E: Explosion

## Patentansprüche

1. Druckentlastungsvorrichtung für explosive Gase, die eine Umbauung (12) um eine im Explosionsfall freigebbare Entlastungsöffnung (11) enthält, wobei in der Umbauung (12) Durchtrittsbereiche mit gasdurchlässigem Material (8, 9, 10) vorgesehen sind, durch die im Explosionsfall die Explosionsgase (13) in die Atmosphäre (14) geleitet werden,
wobei die Umbauung (12) mindestens ein gasdurchlässiges Druckentlastungsmodul (1) enthält, das ein äußeres gasdurchlässiges Gehäuseteil (2) aufweist, in dem mindestens zwei durchströmbare Flammsperrkammern (3, 4, 5) angeordnet sind, wobei in der der freigebbaren Entlastungsöffnung (11) zugewandten ersten Flammsperrkammer (3) eine erste Stahlwollfüllung (8) mit dünnen Stahlwollfasern (15) angeordnet ist, **dadurch gekennzeichnet, dass** in mindestens einer weiteren nach außen benachbarten zweiten Flammsperrkammer (4) eine zweite Stahlwollfüllung (9) mit jeweils eine Stufe dickeren Stahlwollfasern (16) angeordnet ist.

2. Druckentlastungsvorrichtung für explosive Gase, die eine Umbauung (12) um eine im Explosionsfall freigebbare Entlastungsöffnung (11) enthält, wobei in der Umbauung (12) Durchtrittsbereiche mit gasdurchlässigem Material (58, 59, 60) vorgesehen sind, durch die im Explosionsfall die Explosionsgase (13) in die Atmosphäre (14) geleitet werden,
wobei die Umbauung (12) mindestens ein gasdurchlässiges Druckentlastungsmodul (1) enthält, das ein äußeres gasdurchlässiges Gehäuseteil (2) aufweist, in dem mindestens zwei durchströmbare Flammsperrkammern (3, 4, 5) angeordnet sind, wobei in der der freigebbaren Entlastungsöffnung (11) zugewandten ersten Flammsperrkammer (3) ein erstes gasdurchlässiges Material (58) mit ersten Fasern (55) eines ersten Durchmessers (D1) und in mindestens einer weiteren nach außen benachbarten zweiten Flammsperrkammer (4) ein zweites gasdurchlässiges Material (59) mit zweiten Fasern (56) eines zweiten Durchmessers (D2) angeordnet ist, **dadurch gekennzeichnet, dass**
der erste Durchmesser (D1) größer als der zweite Durchmesser (D2) ist und wobei das gasdurchlässige Material (58, 59, 60) Stahlwolle ist.

3. Druckentlastungsvorrichtung nach Anspruch 1 oder 2, **dadurch gekennzeichnet, dass** das gasdurchlässige Gehäuseteil (2) zylinder- oder quaderförmig ausgebildet ist, aus einer oder vier geschlossenen Seitenwänden (18) und zwei gasdurchlässigen Deckplatten (19) aus metallischen Blechen besteht, wobei die Deckplatten (19) mindestens im Zentrum eine Loch- oder Gitterstruktur mit Aussparungen aufweisen, die zum Durchströmen der Explosionsgase (13) dienen.

4. Druckentlastungsvorrichtung nach Anspruch 3, **dadurch gekennzeichnet, dass** im Gehäuseteil (2) parallel zu den Deckplatten (19) mindestens eine gasdurchlässige Trennwand (20) angeordnet ist, die aus einer metallischen Lochplatte oder einer gasdurchlässigen Gitterstruktur besteht.

5. Druckentlastungsvorrichtung nach Anspruch 4, **dadurch gekennzeichnet, dass** mindestens zwei Trennwände (20) im Gehäuseteil (2) mindestens drei Flammsperrkammern (3, 4, 5) bilden, wobei in der ersten Flammsperrkammer (3) eine erste Stahlwollfüllung (8) mit dünnen Stahlwollfasern (15) mit einem Durchmesser von 0,01 mm bis 0,2 mm und in der nach außen benachbarten zweiten Flammsperrkammer (4) eine zweite Stahlwollfüllung (10) mit dickeren Stahlwollfasern (16) mit einem Durchmesser von 0,21 mm bis 0,5 mm und in einer weiteren nach außen benachbarten dritten Flammsperrkammer (5) mit einer weiteren Stufe dickeren Stahlwollfasern (17) mit einem Durchmesser von 0,51 mm bis 1 mm enthalten sind.

6. Druckentlastungsvorrichtung nach Anspruch 4 oder 5, **dadurch gekennzeichnet, dass** im Gehäuseteil (2) zwischen den Deckplatten (19) und den Trennwänden (20) mehrere Distanzbolzen (6) oder andere Abstandshalter angeordnet sind, die so ausgebildet sind, dass sie den Durchströmabstand zwischen den Deckplatten (19) und den Trennwänden (20) und den Trennwänden (19) untereinander im Explosionsfall konstant halten.

7. Druckentlastungsvorrichtung nach einem der Ansprüche 1 bis 6, **dadurch gekennzeichnet, dass** die Umbauung (12) um die Entlastungsöffnung (11) mindestens eines oder mehrere gasdurchlässige Druckentlastungsmodule (1) enthält, wobei bei einer aus mehreren gasdurchlässigen Druckentlastungsmodulen (1) bestehenden Ausführung diese so angeordnet und miteinander verbunden sind, dass sie einen Metallkasten, einen Korb und/oder eine mehrteilige Druckentlastungsmodulschicht bilden.

8. Druckentlastungsvorrichtung nach einem der Ansprüche 1 bis 7, **dadurch gekennzeichnet, dass** atmosphärenseitig vor dem gasdurchlässigen Druckentlastungsmodul (1) zusätzlich noch ein Staubfilter (21) und/oder ein Metallstaubfilter (22) angeordnet ist.

9. Druckentlastungsvorrichtung nach Anspruch 8, **dadurch gekennzeichnet, dass** das gasdurchlässige Druckentlastungsmodul (1) und/oder der Staubfilter (21) und/oder der Metallstaubfilter (22) in einer Gehäusehaube (23) angeordnet sind, wobei die Gehäusehaube (23) um die Entlastungsöffnung (11) mit der explosionsgefährdeten Anlage oder einem anderen Umbauungsteil verbunden ist.

10. Modulare Druckentlastungseinheit, die in einem Gehäusebauteil zumindest zwei gasdurchlässige Druckentlastungsmodule (1),
wobei jedes Druckentlastungsmodul (1) ein äußeres gasdurchlässiges Gehäuseteil (2) aufweist, in dem mindestens zwei durchströmbare Flammsperrkammern angeordnet sind, wobei in der der freigebbaren Entlastungsöffnung (11) eines Gehäusebauteils zugewandten ersten Flammsperrkammer (3) eine erste Stahlwollfüllung (8) mit Stahlwollfasern (15) eines ersten Durchmessers (D1) angeordnet ist, und in einer nach außen benachbarten zweiten Flammsperrkammer (4) eine zweite Stahlwollfüllung (9) mit Stahlwollfasern (16) eines zweiten Durchmessers (D2) angeordnet ist, wobei entweder die zweiten Stahlwollfasern (16) eine Stufe dicker als die ersten Stahlwollfasern (15) sind, oder die Durchmesser (D1) der ersten Stahlwollfasern (15) größer als die Durchmesser (D2) der zweiten Stahlwollfasern (16) sind,
wobei das Gehäusebauteil dazu ausgelegt ist, die gasdurchlässigen Druckentlastungsmodule (1) aufzunehmen, und
wobei die zumindest zwei gasdurchlässigen Druckentlastungsmodule (1) nebeneinander oder übereinander an der im Explosionsfall freigebbaren Entlastungsöffnung (11) angeordnet sind.

11. Modulare Druckentlastungseinheit nach Anspruch 10, wobei die zumindest zwei gasdurchlässigen Druckentlastungsmodule (1), bezogen auf den Faserdurchmesser, mit darin entgegengesetzt zueinander angeordneten Stahlwollfüllungen (8, 9, 10) oder gasdurchlässigen Materialien (58, 59, 60) übereinander angeordnet sind.

12. Modulare Druckentlastungseinheit nach Anspruch 10 oder 11, wobei die zumindest zwei gasdurchlässigen Druckentlastungsmodule (1) einzeln austauschbar sind.

13. Brandschutzvorrichtung, die eine Einhausung (112) einer im Brandfall freigebbaren Öffnung (111) zwischen einem Brandraum (201) und einem Schutzraum (203) aufweist, wobei in der Einhausung (112) Durchtrittsbereiche mit gasdurchlässigem Material (58, 59, 60) vorgesehen sind,
wobei die Einhausung (112) mindestens ein gasdurchlässiges Brandschutzmodul (101) aufweist, das ein äußeres gasdurchlässiges Gehäuseteil (102) aufweist, in dem mindestens zwei durchströmbare Brandsperrkammern (103, 104, 105) angeordnet sind, wobei in der ersten Brandsperrkammer (103) ein erstes gasdurchlässiges Material (58) mit ersten Fasern (55) eines ersten Durchmessers (D1) angeordnet ist, **dadurch gekennzeichnet, dass**
in mindestens einer weiteren nach außen benachbarten zweiten Brandsperrkammer (104) ein zweites gasdurchlässiges Material (59) mit zweiten Fasern (56) eines zweiten Durchmessers (D2) angeordnet ist
wobei in der dem Schutzraum (203) zugewandten ersten Brandsperrkammer (103) eine die ersten Fasern (55) Stahlwollfasern sind, und in der nach außen benachbarten zweiten Brandsperrkammer (104) die zweiten Fasern (56) Stahlwollfasern sind, wobei entweder die zweiten Stahlwollfasern (56) eine Stufe dicker als die ersten Stahlwollfasern (55) sind, oder die Durchmesser (D1) der ersten Stahlwollfasern (55) größer als die Durchmesser (D2) der zweiten Stahlwollfasern (56) sind.

14. Brandschutzvorrichtung nach Anspruch 13, die ferner eine Druckregeleinrichtung zur Einstellung eines Unterdrucks in dem Brandraum (201) im Vergleich zum Schutzraum (203) aufweist.

## Claims

1. Pressure relief device for explosive gases, comprising an enclosure (12) around a relief opening (11) that can be released in the event of an explosion, said enclosure (12) being provided with passage areas with gas-permeable material (8, 9, 10) through which the explosive gases (13) are led into the atmosphere (14) in the event of an explosion,
wherein said enclosure (12) comprises at least one gas permeable pressure relief module (1) having an outer gas permeable housing part (2) in which at least two flame arresting chambers (3, 4, 5) that can be flown through are arranged, wherein in the first flame arresting chamber (3) facing the releasable relief opening (11) a first steel wool filling (8) with thin steel wool fibres (15) is arranged, **characterized in that** in at least one further outwardly adjacent flame arresting chamber (4) a second steel wool filling (9) is arranged, each of which comprises a layer of thicker steel wool fibres (16).

2. Pressure relief device for explosive gases, comprising an enclosure (12) around a relief opening (11) that can be released in the event of an explosion, said enclosure (12) being provided with passage areas with gas-permeable material (58,59, 60) through which the explosive gases (13) are led into the atmosphere (14) in the event of an explosion,
wherein said enclosure (12) comprises at least one gas permeable pressure relief module (1) having an outer gas permeable housing part (2) in which at least two flame arresting chambers (3, 4, 5) that can be flown through are arranged, wherein in the first flame arresting chamber (3) facing the releasable relief opening (11) a first gas permeable material (58) with first fibres (55) of a first diameter (D1) and in at least one further outwardly adjacent second flame arresting chamber (4) a second gas permeable material (59) with second fibres (56) of a second diameter (D2) is arranged,
**characterized in that** the first diameter (D1) is larger than the second diameter (D2) and the gas permeable material (58, 59, 60) is steel wool.

3. Pressure relief device according to claim 1 or 2, **characterized in that** the gas permeable housing part (2) has a cylindrical or cuboid shape and consists of one or four closed lateral walls (18) and two gas permeable cover plates (19) made of sheet metal, said cover plates (19) having at least in the centre a hole or lattice structure with openings through which the explosive gases (13) can pass.

4. Pressure relief device according to claim 3, **characterized in that** in the housing part (2) at least one gas permeable partition wall (20) is arranged in parallel to the cover plates (19), said partition wall (20) consisting of a perforated metal plate or a gas permeable lattice structure.

5. Pressure relief device according to claim 4, **characterized in that** at least two partition walls (20) in the housing part (2) form at least three flame arresting chambers (3, 4, 5), wherein the first flame arresting chamber (3) contains a first steel wool filling (8) with thin steel wool fibres (15) with a diameter of 0.01 mm to 0.2 mm and the outwardly adjacent second flame arresting chamber (4) contains a second steel wool filling (10) with thicker steel wool fibres (16) with a diameter of 0.21 mm to 0.5 mm and a further outwardly adjacent third flame arresting chamber (5) contains a further layer of thicker steel wool fibres (17) with a diameter of 0.51 mm to 1 mm.

6. Pressure relief device according to claim 4 or 5, **characterized in that** several distance bolts (6) or other spacers are arranged in the housing part (2) between the cover plates (19) and the partition walls (20), said spacers being designed in such a way that they keep the flow-through distance between the cover plates (19) and the partition walls (20) and between the individual partition walls (19) constant.

7. Pressure relief device according to one of the claims 1 to 6, **characterized in that** the enclosure (12) around the relief opening (11) contains at least one or several gas permeable pressure relief modules (1), wherein, in a design comprising several gas permeable pressure relief modules (1), these are arranged and connected with each other in such a way that they form a metal box, a basket and/or a multi-component pressure relief module layer.

8. Pressure relief device according to one of the claims 1 to 7, **characterized in that** an additional dust filter (21) and/or a metal dust filter (22) is arranged in front of the gas permeable pressure relief module (1) on the side of the atmosphere.

9. Pressure relief device according to claim 8, **characterized in that** the gas permeable pressure relief module (1) and/or the dust filter (21) and/or the metal dust filter (22) are arranged in a housing hood (23), said housing hood (23) around the relief opening (11) being connected with the potentially explosive system or another enclosure part.

10. Modular pressure relief unit comprising, in a housing component, at least two gas permeable pressure relief modules (1), each of said pressure relief modules (1) comprising an outer gas permeable housing part (2), in which at least two flame arresting chambers that can be flown through are arranged, wherein in the first flame arresting chamber (3) facing the releasable relief opening (11) of a housing component, a first steel wool filling (8) with steel wool fibres (15) of a first diameter (D1) is arranged, and in an outwardly adjacent second flame arresting chamber (4) a second steel wool filling (9) with steel wool fibres (16) of a second diameter (D2) is arranged, wherein either the second steel wool fibres (16) are one grade thicker than the first steel wool fibres (15) or the diameters (D1) of the first steel wool fibres (15) are larger than the diameters (D2) of the second steel wool fibres (16), wherein the housing component is designed to accommodate the gas permeable pressure relief modules (1), and
wherein the at least two gas permeable pressure relief modules (1) are arranged side by side or one over the other at the relief opening that is releasable in the event of an explosion.

11. Modular pressure relief unit according to claim 10, wherein the at least two gas permeable pressure relief modules (1) with steel wool fillings (8, 9, 10) or gas permeable materials (58, 59, 60) arranged within them in opposite direction to each other, are arranged one over the other in relation to the fibre diameter.

12. Modular pressure relieve unit according to claim 10 or 11, wherein the at least two gas permeable pressure relief modules (1) can be exchanged separately.

13. Fire protection device comprising an enclosure (112) of an opening (111) between a fire room (201) and a protected room (203), said opening (111) being releasable in the event of a fire, and with passage areas with gas permeable material (58, 59, 60) being provided in the enclosure (112),
wherein said enclosure (112) comprises at least one gas permeable fire protection module (101) having an outer gas permeable housing part (102) in which at least two fire arresting chambers (103, 104, 105) that can be flown through are arranged, wherein in the first fire arresting chamber (103) a first gas permeable material (58) with first fibres (55) of a first diameter (D1)is arranged,
**characterized in that** in at least one further outwardly adjacent second fire arresting chamber (104) a second gas permeable material (59) with second fibres (56) of a second diameter (D2) is arranged,
wherein the first fibres (55) in the first fire arresting chamber (103) facing the protected room (203) are steel wool fibres, and the second fibres (56) in the outwardly adjacent second fire arresting chamber (104) are steel wool fibres, wherein either the second steel wool fibres (56) are one grade thicker than the first steel wool fibres (55), or the diameters (D1) of the first steel wool fibres (55) are larger than the diameters (D2) of the second steel wool fibres (56).

14. Fire protection device according to claim 13, comprising further a pressure control device for bringing about a negative pressure in the fire room (201) as compared to the protected room (203).

## Revendications

1. Dispositif de décharge de pression pour gaz explosifs, qui contient une enceinte (12) autour d'une ouverture de décharge (11) libérable en cas d'explosion, dans lequel des zones de passage avec matériau perméable aux gaz (8, 9, 10) sont prévues dans l'enceinte (12), par lesquelles les gaz d'explosion (13) sont dirigés dans l'atmosphère (14) en cas d'explosion,
dans lequel l'enceinte (12) contient au moins un module de décharge de pression perméable aux gaz (1), qui présente une partie de boîtier (2) extérieure perméable aux gaz, dans laquelle au moins deux chambres pare-flammes (3, 4, 5) pouvant être traversées sont agencées, dans lequel un premier remplissage en laine d'acier (8) avec de minces fibres de laine d'acier (15) est agencé dans la première chambre pare-flammes (3) tournée vers l'ouverture de décharge (11) libérable, **caractérisé en ce qu'**un deuxième remplissage en laine d'acier (9) avec des fibres de laine d'acier (16) respectivement un niveau plus épais est agencé dans au moins une autre deuxième chambre pare-flammes (4) adjacente vers l'extérieur.

2. Dispositif de décharge de pression pour gaz explosifs, qui contient une enceinte (12) autour d'une ouverture de décharge (11) libérable en cas d'explosion, dans lequel des zones de passage avec matériau perméable aux gaz (58, 59, 60) sont prévues dans l'enceinte (12), par lesquelles les gaz d'explosion (13) sont dirigés dans l'atmosphère (14) en cas d'explosion,
dans lequel l'enceinte (12) contient au moins un module de décharge de pression perméable aux gaz (1), qui présente une partie de boîtier (2) extérieure perméable aux gaz, dans laquelle au moins deux chambres pare-flammes (3, 4, 5) pouvant être traversées sont agencées, dans lequel un premier matériau perméable aux gaz (58) avec des premières fibres (55) d'un premier diamètre (D1) est agencé dans la première chambre pare-flammes (3) tournée vers l'ouverture de décharge (11) libérable et un deuxième matériau perméable aux gaz (59) avec des deuxièmes fibres (56) d'un deuxième diamètre (D2) est agencé dans au moins une autre deuxième chambre pare-flammes (4) adjacente vers l'extérieur,
**caractérisé en ce que** le premier diamètre (D1) est supérieur au deuxième diamètre (D2) et dans lequel le matériau perméable aux gaz (58, 59, 60) est de la laine d'acier.

3. Dispositif de décharge de pression selon la revendication 1 ou 2, **caractérisé en ce que** la partie de boîtier (2) perméable aux gaz est réalisée en forme de cylindre ou de parallélépipède, se compose d'une ou quatre parois latérales fermées (18) et de deux plaques de recouvrement (19) perméables aux gaz en tôles métalliques, dans lequel les plaques de recouvrement (19) présentent au moins au centre une structure perforée ou grillagée avec des évidements, qui servent à la traversée des gaz d'explosion (13).

4. Dispositif de décharge de pression selon la revendication 3, **caractérisé en ce qu'**au moins une cloison de séparation (20) perméable aux gaz, qui se compose d'une plaque perforée métallique ou d'une structure grillagée perméable aux gaz, est agencée dans la partie de boîtier (2) parallèlement aux plaques de recouvrement (19).

5. Dispositif de décharge de pression selon la revendication 4, **caractérisé en ce qu'**au moins deux cloisons de séparation (20) dans la partie de boîtier (2) forment au moins trois chambres pare-flammes (3, 4, 5), dans lequel un premier remplissage en laine d'acier (8) avec de minces fibres de laine d'acier (15) d'un diamètre de 0,01 mm à 0,2 mm est contenu dans la première chambre pare-flammes (3) et un deuxième remplissage en laine d'acier (10) avec des fibres de laine d'acier (16) plus épaisses d'un diamètre de 0,21 mm à 0,5 mm est contenu dans la deuxième chambre pare-flammes (4) adjacente vers l'extérieur et avec des fibres de laine d'acier (17) un niveau plus épais d'un diamètre de 0,51 mm à 1 mm dans une autre troisième chambre pare-flammes (5) adjacente vers l'extérieur.

6. Dispositif de décharge de pression selon la revendication 4 ou 5, **caractérisé en ce que** plusieurs boulons d'écartement (6) ou autre écarteurs, qui sont réalisés de sorte qu'ils maintiennent constante la distance de traversée entre les plaques de recouvrement (19) et les cloisons de séparation (20) et les cloisons de séparation (19) entre elles en cas d'explosion, sont agencés dans la partie de boîtier (2) entre les plaques de recouvrement (19) et les cloisons de séparation (20).

7. Dispositif de décharge de pression selon l'une quelconque des revendications 1 à 6, **caractérisé en ce que** l'enceinte (12) autour de l'ouverture de décharge (11) contient au moins un ou plusieurs modules de décharge de pression perméables aux gaz (1), dans lequel dans le cas d'un mode de réalisation composé de plusieurs modules de décharge de pression perméables aux gaz (1), ceux-ci sont agencés ou reliés les uns aux autres de sorte qu'ils forment une boîte métallique, un panier et/ou une couche de module de décharge de pression en plusieurs parties.

8. Dispositif de décharge de pression selon l'une quelconque des revendications 1 à 7, **caractérisé en ce qu'**un filtre à poussière (21) et/ou un filtre à poussière métallique (22) est agencé en plus côté atmosphère en amont du module de décharge de pression perméable aux gaz (1).

9. Dispositif de décharge de pression selon la revendication 8, **caractérisé en ce que** le module de décharge de pression perméable aux gaz (1) et/ou le filtre à poussière (21) et/ou le filtre à poussière métallique (22) sont agencés dans un capot boîtier (23), dans lequel le capot boîtier (23) est relié autour de l'ouverture de décharge (11) à l'installation à risque d'explosion ou à une autre partie d'enceinte.

10. Unité de décharge de pression modulaire, qui au moins deux modules de décharge de pression perméables aux gaz (1) dans un composant de boîtier, dans laquelle chaque module de décharge de pression (1) présente une partie de boîtier (2) extérieure perméable aux gaz, dans laquelle au moins deux chambres pare-flammes pouvant être traversées sont agencées, dans laquelle un premier remplissage en laine d'acier (8) avec des fibres de laine d'acier (15) d'un premier diamètre (D1) est agencé dans la première chambre pare-flammes (3) tournée vers l'ouverture de décharge (11) libérable d'un composant de boîtier, et un deuxième remplissage en laine d'acier (9) avec des fibres de laine d'acier (16) d'un deuxième diamètre (D2) est agencé dans une deuxième chambre pare-flammes (4) adjacente vers l'extérieur, dans laquelle soit les deuxièmes fibres de laine d'acier (16) sont un niveau plus épais que les premières fibres de laine d'acier (15), soit les diamètres (D1) des premières fibres de laine d'acier (15) sont supérieurs aux diamètres (D2) des deuxièmes fibres de laine d'acier (16),
dans laquelle le composant de boîtier est conçu pour recevoir les modules de décharge de pression perméables aux gaz (1), et
dans laquelle les au moins deux modules de décharge de pression perméables aux gaz (1) sont agencés l'un à côté de l'autre ou l'un au-dessus de l'autre au niveau de l'ouverture de décharge (11) libérable en cas d'explosion.

11. Unité de décharge de pression modulaire selon la revendication 10, dans laquelle les au moins deux modules de décharge de pression perméables aux gaz (1) sont agencés l'un au-dessus de l'autre, par rapport au diamètre des fibres, avec des remplissages en laine d'acier (8, 9, 10) opposés les uns aux autres ou des matériaux perméables aux gaz (58, 59, 60).

12. Unité de décharge de pression modulaire selon la revendication 10 ou 11, dans laquelle les au moins deux modules de décharge de pression perméables aux gaz (1) sont échangeables individuellement.

13. Dispositif de protection contre les incendies, qui présente une enceinte (112) d'une ouverture (111) libérable en cas d'incendie entre un espace d'incendie (201) et un espace de protection (203), dans lequel des zones de passage avec matériau perméable aux gaz (58, 59, 60) sont prévues dans l'enceinte (112),
dans lequel l'enceinte (112) présente au moins un module de protection contre les incendies perméable aux gaz (101), qui présente une partie de boîtier (102) extérieure perméable aux gaz, dans laquelle au moins deux chambres pare-incendie (103, 104, 105) pouvant être traversées sont agencées, dans lequel un premier matériau perméable aux gaz (58) avec des premières fibres (55) d'un premier diamètre (D1) est agencé dans la première chambre pare-incendie (103), **caractérisé en ce que** un deuxième matériau perméable aux gaz (59) avec des deuxièmes fibres (56) d'un deuxième diamètre (D2) est agencé dans au moins une autre deuxième chambre pare-incendie (104) adjacente vers l'extérieur,
dans lequel les premières fibres (55) dans la première chambre pare-incendie (103) tournée vers l'espace de protection (203) sont des fibres de laine d'acier, et les deuxièmes fibres (56) dans la deuxième chambre pare-incendie (104) adjacente vers l'extérieur sont des fibres de laine d'acier, dans lequel soit les deuxièmes fibres de laine d'acier (56) sont un niveau plus épais que les premières fibres de laine d'acier (55), soit les diamètres (D1) des premières fibres de laine d'acier (55) sont supérieurs aux diamètres (D2) des deuxièmes fibres de laine d'acier (56).

14. Dispositif de protection contre les incendies selon la revendication 13, qui présente en outre un dispositif de régulation de pression pour le réglage d'une dépression dans l'espace d'incendie (201) par rapport à l'espace de protection (203).
